# EUROPEAN PATENT APPLICATION

(11) **EP 2 335 903 A1**
(43) Date of publication of application: **22.06.2011**
(21) Application number: 09812995.0
(22) Date of filing: 25.08.2009
(51) Int. Cl.: B29C 49/36, B29C 49/18

(54) **ROTARY BLOW MOLDING DEVICE**

(30) Priority: 12.09.2008 JP 2008235480; 12.09.2008 JP 2008235481; 07.11.2008 JP 2008286512
(71) Applicant: Nissei Asb Machine Co., Ltd., Komoro-shi, Nagano 384-8585 (JP)
(72) Inventor: YAMAGUCHI, Masaki, Komoro-shi Nagano 384-8585 (JP); TAKEDA, Shinya, Komoro-shi Nagano 384-8585 (JP); TANABE, Toshiaki, Komoro-shi Nagano 384-8585 (JP)
(74) Representative: Wunderlich, Rainer
(86) International application number: PCT/JP2009/064779
(87) International publication number: WO 2010/029848

(57) **Abstract**

A rotary blow molding apparatus (10) that can produce a large number of heat-resistant containers per unit time while requiring a small installation area includes a primary blow molding rotary section (20) that rotates a plurality of heated primary blow molds (22) while blow-molding and shrinking a primary blow-molded article, a secondary blow molding rotary section (30) that rotates a plurality of secondary blow molds (32) while blow-molding a secondary blow-molded article, and a relay rotary section (40) that is disposed between the primary blow molding rotary section and the secondary blow molding rotary section, and transfers the primary blow-molded article from the primary blow molding rotary section (20) to the secondary blow molding rotary section (30) via at least one first holding section that is mounted on each of a plurality of rotating relay arms (42).

## Description

### TECHNICAL FIELD

The present invention relates to a rotary blow molding apparatus.

### BACKGROUND ART

A rotary blow molding apparatus that includes a number of blow molds at constant angular intervals has been known (Patent Document 1). According to the rotary blow molding apparatus disclosed in Patent Document 1, blow-molded articles can be mass-produced by utilizing a number of rotating blow molds (72) (see Fig. 2 of Patent Document 1).

A blow molding apparatus used to mass-produce heat-resistant containers has been known (Patent Document 2). The blow molding apparatus disclosed in Patent Document 2 is a large apparatus that includes a first heating station (4) that crystallizes the neck of a preform, a second heating station (14) that heats the body of the preform to an optimum blow temperature, a primary blow molding station (17), a third heating station (24) that shrinks and heats the primary blow-molded article, and a secondary blow molding station (28) (see FIGS. 2A and 2B of Patent Document 2).

Patent Documents 3 and 4 disclose a blow molding apparatus that molds a heat-resistant container via a linear transfer operation.

FIG. 8 of Patent Document 5 discloses a blow molding apparatus that transfers a molded article to a rotary blow station (2) using a transfer table (3b).

The blow mold (72) shown in FIG. 2 of Patent Document 1 includes a movable cavity mold (84) that can be opened and closed relative to a stationary cavity mold (83) in a horizontal plane around a vertical axis (86).

FIG. 1 of Patent Document 6 discloses a book-type blow mold (202) in which a pair of cavity molds are symmetrically opened and closed in a horizontal plane around a vertical axis.

FIG. 1 of Patent Document 7 discloses an alligator blow mold that includes a movable cavity mold (4) that can be opened and closed relative to a stationary cavity mold (2) in a vertical plane around a horizontal axis (X).

### RELATED-ART DOCUMENT

### PATENT DOCUMENT

Patent Document 1: JP-B-60-45045 (FIG. 2)
Patent Document 2: JP-B-4-39416 (FIGS. 2A and 2B)
Patent Document 3: JP-A-2003-231170 (FIG. 1)
Patent Document 4: JP-A-2006-264035 (FIG. 1)
Patent Document 5: JP-A-2006-130755 (FIG. 8)
Patent Document 6: WO89/001400 (FIG. 1)
Patent Document 7: JP-T-2002-516769 (FIG. 1)

### SUMMARY OF THE INVENTION

### PROBLEMS TO BE SOLVED BY THE INVENTION

When molding a heat-resistant container via a linear transfer operation (see Patent Documents 3 and 4), a number of blow molds cannot be disposed, differing from the rotary blow molding apparatus disclosed in Patent Document 1. Therefore, the number of products produced per unit time is limited (i.e., products cannot be mass-produced). The number of products produced per unit time can only be increased by increasing the number of blow molding apparatuses. This increases the installation area of the blow molding apparatuses within a factory.

Moreover, since the linear transfer operation involves deceleration and acceleration when intermittently transferring the molded articles, the molded articles may be inclined during transfer (see paragraph 0006 of Patent Document 4). Therefore, Patent Document 4 takes measures to prevent inclination of the primary blow-molded articles during secondary blow molding.

The large apparatus disclosed in Patent Document 2 also requires a large installation area, and has a complex configuration.

Several aspects of the invention may provide a rotary blow molding apparatus that can produce a large number of heat-resistant containers per unit time without requiring a large installation area.

The rotary molded article transfer device (transfer table 3b) disclosed in Patent Document 5 has a problem in that the molded article is rotated within a chuck (9) when maintaining the molded article at the transfer position, so that the neck of the molded article is damaged (i.e., the appearance of the product is impaired).

Several aspects of the invention may provide a rotary molded article transfer device that can transfer a molded article without damaging the neck of the molded article, and a rotary blow molding apparatus using the same.

Several aspects of the invention may provide a rotary molded article transfer device that can reduce the dead angle of the transfer target device, and a rotary blow molding apparatus using the same.

A molded article can be quickly introduced into and removed from a blow mold when using the book-type blow mold disclosed in Patent Document 6 as compared with the case of using the blow mold disclosed in Patent Document 1.

The alligator blow mold disclosed in Patent Document 7 has an advantage over the book-type blow mold disclosed in Patent Document 6 in that the molded article transfer path does not become complex when comparing FIGS. 3 and 4 of Patent Document 7 (see paragraphs 0025 and 0026 of Patent Document 7).

When using the alligator blow mold disclosed in Patent Document 7, the weight of the movable cavity mold (4), a centrifugal force caused by rotation, and the like function as an external force that opens the movable cavity mold (4) in a clamped state shown in FIG. 12 of Patent Document 7. However, the alligator blow mold disclosed in Patent Document 7 has relatively low resistance against an external force that opens the movable cavity mold (4).

Several aspects of the invention may provide a rotary blow molding apparatus that can increase resistance against an external force that opens a movable cavity mold to improve the molding quality while using an alligator blow mold.

### MEANS FOR SOLVING THE PROBLEMS

According to a first aspect of the invention, there is provided a rotary blow molding apparatus comprising:
a primary blow molding rotary section that rotates a plurality of heated primary blow molds while blow-molding a preform in each of the plurality of primary blow molds to obtain a primary blow-molded article, and shrinking the primary blow-molded article in each of the plurality of primary blow molds;
a secondary blow molding rotary section that rotates a plurality of secondary blow molds while blow-molding the primary blow-molded article in each of the plurality of secondary blow molds to obtain a secondary blow-molded article; and
a relay rotary section that is disposed between the primary blow molding rotary section and the secondary blow molding rotary section, and transfers the primary blow-molded article from the primary blow molding rotary section to the secondary blow molding rotary section via at least one first holding section that is mounted on each of a plurality of rotating relay arms.

According to the first aspect of the invention, the primary blow molding rotary section blow-molds the preform in the heated primary blow mold to obtain a primary blow-molded article. The primary blow-molded article that has been blow-molded in the primary blow mold adheres due to blow air to the surface of the cavity formed in the primary blow mold of which the outer surface is heated, and the body of the primary blow-molded article thermally shrinks when blow air is discharged after blow molding. The secondary blow molding rotary section subjects the primary blow-molded article that has shrunk and been softened to secondary blow molding (i.e., expands the primary blow-molded article) in the secondary blow mold to obtain a secondary blow-molded article (end product). A heat-resistant container can thus be molded.

According to the first aspect of the invention, the primary blow-molded article can be transferred between the primary blow molding rotary section and the secondary blow molding rotary section using only the relay rotary section. The relay rotary section can directly receive the primary blow-molded article from the rotating primary blow mold of the primary blow molding rotary section via the first holding section mounted on the rotating relay arm, rotate the primary blow-molded article by a given rotation angle, and directly transfer the primary blow-molded article to the rotating secondary blow mold of the secondary blow molding rotary section. The number of heat-resistant containers produced per unit time can thus be increased based on the number of blow molds provided in the primary blow molding rotary section and the secondary blow molding rotary section while reducing the installation area by utilizing the primary blow molding rotary section, the secondary blow molding rotary section, and the relay rotary section. Moreover, since the primary blow molding rotary section, the secondary blow molding rotary section, and the relay rotary section are continuously rotated in one direction at a low speed, the molded articles are not subjected to high deceleration and acceleration, differing from a linear transfer operation. This prevents a situation in which the molded articles are bent or inclined (collapse), so that the molding quality is improved.

In the rotary blow molding apparatus according to the first aspect of the invention,
the relationships "D1>D3" and "D2>D3" may be satisfied when a circle that corresponds to a rotation path of a primary blow center of the primary blow molding rotary section, and is defined by a first rotation center and a first diameter D1 of the primary blow molding rotary section is referred to as a first circle, a circle that corresponds to a rotation path of a secondary blow center of the secondary blow molding rotary section, and is defined by a second rotation center and a second diameter D2 of the secondary blow molding rotary section is referred to as a second circle, and a circle that is defined by a third rotation center and a third diameter D3 of the relay rotary section, and is adjacent to the first circle and the second circle is referred to as a third circle.

Specifically, the third diameter D3 of the relay rotary section is smaller than the diameter D1 of the transfer path of the primary blow molding rotary section and the diameter D2 of the transfer path of the secondary blow molding rotary section. Since the relay rotary section merely transfers the primary blow-molded article, the third diameter D3 of the relay rotary section is minimized, so that the size of the rotary blow molding apparatus is reduced. Note that the third circle is an imaginary transfer path that passes through at least a position where the relay rotary section receives the primary blow-molded article from the primary blow molding rotary section and a position where the relay rotary section transfers the primary blow-molded article to the secondary blow molding rotary section. The transfer path of the relay rotary section need not be larger than (protrude from) the third circle. Therefore, the third circle is the maximum transfer path of the relay rotary section.

In the first aspect of the invention, the relationship "D1=D2" may be satisfied. The first diameter D1 and the second diameter D2 need not necessarily be identical. However, when the apparatus necessarily includes the primary blow molding rotary section and the secondary blow molding rotary section, most of the components (elements) of the primary blow molding rotary section and the secondary blow molding rotary section can be shared when the relationship "D1=D2" is satisfied.

In the first aspect of the invention,
the third rotation center may be disposed at a position that is shifted in one direction relative to a first straight line that passes through the first rotation center and the second rotation center.

When the third rotation center is disposed on the first straight line, the distance L between the first rotation center and the third rotation center is equal to the value "D3+(D1+D2)/2". When the third rotation center is disposed as described above, the distance L is smaller than the value "D3+(D1+D2)/2". The size of the entire apparatus can be reduced by thus reducing the distance L and the diameter D3.

In the rotary blow molding apparatus according to the first aspect of the invention,
the primary blow molding rotary section and the secondary blow molding rotary section may be rotated in a first direction, and the relay rotary section may be rotated in a second direction opposite to the first direction.

When each rotation direction is set as described above, and the third rotation center is shifted, the dead angle of the primary blow molding rotary section and the secondary blow molding rotary section can be reduced.

According to the first aspect of the invention, the rotary blow molding apparatus may further comprise:
a supply rotary section that supplies the preform to the primary blow molding rotary section via at least one second holding section that is mounted on each of a plurality of rotating supply arms,
a fourth rotation center of the supply rotary section may be disposed at a position that is shifted relative to the first straight line in the one direction as compared with the third rotation center.

According to the above configuration, the supply rotary section can be disposed at the upstream position in the rotation direction, and the relay rotary section can be disposed at the downstream position in the rotation direction. Moreover, the effective process angle from the supply rotary section to the relay rotary section can be increased, so that the dead angle from the relay rotary section to the supply rotary section can be reduced.

According to the first aspect of the invention, the rotary blow molding apparatus may further comprise:
a removal rotary section that removes the secondary blow-molded article from the secondary blow molding rotary section via at least one third holding section that is mounted on each of a plurality of rotating removal arms,
a fifth rotation center of the removal rotary section may be disposed at a position that is shifted relative to the first straight line in the one direction as compared with the third rotation center.

According to the above configuration, the removal rotary section can be disposed at the upstream position in the rotation direction, and the relay rotary section can be disposed at the downstream position in the rotation direction. Moreover, the effective process angle from the removal rotary section to the relay rotary section can be increased, so that the dead angle from the removal rotary section to the relay rotary section can be reduced.

In the rotary blow molding apparatus according to the first aspect of the invention,
a plurality of the first holding sections may be mounted on each of the plurality of relay arms, and the relay rotary section may simultaneously receive a plurality of the primary blow-molded articles from the primary blow molding rotary section, and may transfer the plurality of primary blow-molded articles to the secondary blow molding rotary section via the plurality of first holding sections.

According to the above configuration, the timing when the primary blow mold is opened in order to transfer the primary blow-molded article to the relay rotary section can be delayed as compared with the case of sequentially transferring the primary blow-molded articles, so that the dead angle of the primary blow molding rotary section can be reduced. Likewise, the timing when the secondary blow mold is opened in order to receive the primary blow-molded article from the relay rotary section can be brought forward, so that the dead angle of the secondary blow molding rotary section can be reduced.

In the rotary blow molding apparatus according to the first aspect of the invention,
a plurality of the second holding sections may be mounted on each of the plurality of supply arms, and the supply rotary section simultaneously may transfer a plurality of the preforms to the primary blow molding rotary section via the plurality of second holding sections.

According to the above configuration, the time in which the primary blow mold is opened in order to receive the preforms from the supply rotary section can be reduced as compared with the case of sequentially transferring the preforms, so that the dead angle of the primary blow molding rotary section can be reduced.

In the rotary blow molding apparatus according to the first aspect of the invention, the plurality of preforms may be sequentially supplied to the plurality of second holding sections. Specifically, whether the preforms are simultaneously or sequentially supplied to the supply rotary section does not affect the dead angle of the primary blow molding rotary section.

In the rotary blow molding apparatus according to the first aspect of the invention,
the removal rotary section may include a plurality of the third holding sections mounted on each of the plurality of removal arms, and the removal rotary section may simultaneously receive a plurality of the secondary blow-molded articles from the secondary blow molding rotary section via the plurality of third holding sections.

According to the above configuration, the timing when the secondary blow mold is opened in order to transfer the secondary blow-molded article to the removal rotary section can be delayed, so that the dead angle of the secondary blow molding rotary section can be reduced.

In the rotary blow molding apparatus according to the first aspect of the invention, the plurality of secondary blow-molded articles may be sequentially discharged from the plurality of third holding sections. Specifically, whether the secondary blow-molded articles are simultaneously or sequentially discharged from the removal rotary section does not affect the dead angle of the secondary blow molding rotary section.

According to a second aspect of the invention, there is provided a rotary molded article transfer device that is one of two rotary molded article transfer devices, each of the two rotary molded article transfer devices rotating at least one molded article in a horizontal plane, and transferring the at least one molded article at each of a plurality of positions (transfer position) at equal angular intervals around a rotation center,
the rotary molded article transfer device including a rotating transfer arm that is provided with at least one first holding section that holds the at least one molded article, the at least one first holding section being reciprocated in a horizontal plane by a stroke that allows transfer in a direction parallel to a straight line that passes through the rotation centers of the two rotary molded article transfer devices, and positioned opposite to at least one second holding section of the other rotary molded article transfer device within a given rotation angle around the transfer position where the transfer arm is disposed along the straight line.

According to the second aspect of the invention, since the molded article is not rotated within the first holding section when transferring at least one molded article via at least one first holding section, the molded article is not damaged. The expression "at least one first holding section is positioned opposite to at least one second holding section" refers to a state in which the first holding section 160 is directly positioned opposite to the second holding section of the other rotary molded article transfer device. The molded article is not rotated within the first holding section as long as the opposing relationship is maintained within a given rotation angle including the transfer position.

In the rotary molded article transfer device according to the second aspect of the invention, the transfer arm may include a plurality of first holding sections that hold a plurality of molded articles side by side from an upstream side to a downstream side in a rotation direction, and the plurality of molded articles may be maintained in an aligned state within the given rotation angle in a rotational tangential direction that perpendicularly intersects the transfer arm at the transfer position.

This makes it possible to simultaneously transfer a plurality of molded articles via a plurality of first holding sections. When the other rotary molded article transfer device is a blow molding apparatus, it is possible to reduce the dead angle where the blow mold is maintained in an open state.

The rotary molded article transfer device according to the second aspect of the invention may further include:
a rotary arm that is rotatably provided at a free end of the transfer arm, and is provided with the plurality of first holding sections; and
a control arm that controls an angle of the rotary arm relative to the transfer arm, one end of the control arm being rotatably secured on the rotary arm.

When the rotary molded article transfer device includes a plurality of first holding sections, the opposing relationship can be easily controlled by mounting a plurality of first holding sections on the rotary arm that is rotatable relative to the transfer arm, and controlling the angle of the rotary arm relative to the transfer arm using the control arm.

The rotary molded article transfer device according to the second aspect of the invention may further include:
a rotating plate that rotates the transfer arm; and
a connection member that is rotatably supported by the rotating plate, and rotatably connects a base end of the transfer arm and the other end of the control arm, and
a four-bar linkage may be formed by the transfer arm, the rotary arm, the control arm, and the connection member.

The opposing relationship can be easily controlled by driving two points of the four-bar linkage.

The rotary molded article transfer device according to the second aspect of the invention may further include:
a first cam plate that is secured on one side of the rotating plate in parallel with the rotating plate, a first cam being formed in the first cam plate;
a second cam plate that is secured on the other side of the rotating plate in parallel with the rotating plate, a second cam being formed in the second cam plate;
a shaft that is secured on the base end of the transfer arm, and is rotatably supported by the rotating plate, the connection member being rotatably supported by one end of the shaft;
a securing member that is secured on the other end of the shaft;
a first cam follower that is guided to the first cam, and is supported by the securing member at a position away from a center of the shaft; and
a second cam follower that is guided to the second cam, and is supported by the connection member at a position away from the center of the shaft, and
the control arm may be rotatably supported by the connection member at a position opposite to the second cam follower with respect to the shaft.

The opposing relationship can be reliably controlled by driving two points of the four-bar linkage via engagement of the cam and the cam follower.

According to a third aspect of the invention, there is provided a rotary blow molding apparatus including:
a primary blow molding rotary section that rotates a plurality of primary blow molds;
a secondary blow molding rotary section that rotates a plurality of secondary blow molds; and
a relay rotary section that includes the above rotary molded article transfer device, and transfers at least one primary blow-molded article from the primary blow molding rotary section to the secondary blow molding rotary section,
at least one primary blow-molded article being transferred from the primary blow molding rotary section to the transfer arm at a first transfer position where the transfer arm is disposed along a first straight line that passes through a first rotation center and a third rotation center, and at least one primary blow-molded article being transferred from the transfer arm to the secondary blow molding rotary section at a second transfer position where the transfer arm is disposed along a second straight line that passes through a second rotation center and the third rotation center, the first rotation center being a rotation center of the primary blow molding rotary section, the second rotation center being a rotation center of the secondary blow molding rotary section, and the third rotation center being a rotation center of the relay rotary section.

According to the third aspect of the invention, the dead angle of the primary blow molding rotary section and the secondary blow molding rotary section can be reduced while preventing damage to the molded article by transferring the molded article between the primary blow molding rotary section and the secondary blow molding rotary section using the above rotary molded article transfer device.

According to a fourth aspect of the invention, there is provided a rotary blow molding apparatus including:
a blow molding rotary section that rotates a plurality of blow molds;
a preform supply wheel section; and
a supply rotary section that includes the above rotary molded article transfer device, and is disposed between the blow molding rotary section and the preform supply wheel section,
preforms being sequentially transferred from the preform supply wheel section to the transfer arm at a first transfer position where the transfer arm is disposed along a line that passes through a second rotation center and a third rotation center, and at least one preform being transferred from the transfer arm to the blow molding rotary section at a second transfer position where the transfer arm is disposed along a line that passes through a first rotation center and the second rotation center, the first rotation center being a rotation center of the blow molding rotary section, the second rotation center being a rotation center of the supply rotary section, and the third rotation center being a rotation center of the preform supply wheel section.

According to the fourth aspect of the invention, the dead angle of the blow molding rotary section can be reduced while preventing damage to the molded article by transferring the preform between the blow molding rotary section and the preform supply wheel section using the above rotary molded article transfer device. Since the preform supply wheel section has a semicircular groove in the periphery, the opposing relationship cannot be obtained at a plurality of locations. Therefore, the preforms are sequentially supplied from the preform supply wheel section to the rotary molded article transfer device.

According to a fifth aspect of the invention, there is provided a rotary blow molding apparatus including:
a blow molding rotary section that rotates a plurality of blow molds;
a removal wheel section; and
a removal rotary section that includes the above rotary molded article transfer device, and is disposed between the blow molding rotary section and the removal wheel section,
at least one blow-molded article being transferred from the blow molding rotary section to the transfer arm at a first transfer position where the transfer arm is disposed along a line that passes through a first rotation center and a second rotation center, and the blow-molded article being sequentially transferred from the transfer arm to the removal wheel section at a second transfer position where the transfer arm is disposed along a line that passes through the second rotation center and a third rotation center, the first rotation center being a rotation center of the blow molding rotary section, the second rotation center being a rotation center of the removal rotary section, and the third rotation center being a rotation center of the removal wheel section.

According to the fifth aspect of the invention, the dead angle of the blow molding rotary section can be reduced while preventing damage to the molded article by transferring the blow-molded article between the blow molding rotary section and the removal wheel section using the above rotary molded article transfer device. Since the removal wheel section has a semicircular groove in the periphery, the opposing relationship cannot be obtained at a plurality of locations. Therefore, the preforms are sequentially discharged to the removal wheel section from the rotary molded article transfer device.

According to a sixth aspect of the invention, there is provided a rotary blow molding apparatus including:
a plurality of blow molds, each of the plurality of blow molds including a stationary cavity mold and a movable cavity mold, the movable cavity mold being opened and closed relative to the stationary cavity mold having a vertical parting surface around a first fulcrum that is a stationary horizontal shaft;
a blow molding rotary section that supports and rotates the plurality of blow molds; and
a mold open/close drive mechanism that opens and closes the movable cavity mold relative to the stationary cavity mold,
the mold open/close drive mechanism including:
   a first link that has a first end and a second end, the first end being rotatably connected to a second fulcrum provided in the movable cavity mold;
   a second link that has a third end and a fourth end, the third end being rotatably connected to a third fulcrum provided at the second end of the first link;
   a third link that has a fifth end and a sixth end, the fifth end being rotatably connected to a fourth fulcrum provided between the third end and the fourth end of the second link, the sixth end being rotatably connected to a stationary fifth fulcrum, the third link rotating around the fifth fulcrum; and
   a moving member that reciprocates a sixth fulcrum provided at the fourth end of the second link across a vertical line that passes through the fifth fulcrum.

According to the sixth aspect of the invention, the movable cavity mold can be opened and closed relative to the stationary cavity mold by the function of the mold open/close drive mechanism by moving the sixth fulcrum across the vertical line that passes through the fifth fulcrum using the moving member. The stationary first fulcrum is positioned in a plane (or the vicinity thereof) along the vertical parting surface of the stationary cavity mold. The stationary fifth fulcrum need not be positioned in a plane along the vertical parting surface of the stationary cavity mold, but is advantageously positioned in the vicinity of a plane along the vertical parting surface of the stationary cavity mold from the viewpoint of design. Therefore, the second fulcrum, the third fulcrum, and the sixth fulcrum positioned on the first link and the second link are shifted to the movable cavity mold with respect to the stationary first fulcrum and the stationary fifth fulcrum when the movable cavity mold is closed. Therefore, the first second link and the second link approach the vertical line. This makes it improve resistance against an external force that opens the movable cavity mold.

According to the sixth aspect of the invention, the second fulcrum, the third fulcrum, and the fourth fulcrum can be substantially aligned along a straight line when the movable cavity mold has moved to the close position with respect to the stationary cavity mold.

In this case, the closed movable cavity mold is rarely opened due to a toggle effect even if an external force is applied. Since the closing amount of the movable cavity mold is small with respect to the movement of the moving member immediately before the second fulcrum, the third fulcrum, and the fourth fulcrum are aligned along a straight line, the closing speed of the movable cavity mold can be reduced immediately before the movable cavity mold is closed.

According to the sixth aspect of the invention, when the movable cavity mold has moved to the close position with respect to the stationary cavity mold, a straight line that connects the fourth fulcrum and the sixth fulcrum substantially perpendicularly intersects a straight line that connects the fourth fulcrum and the fifth fulcrum.

In this case, only a vertical downward force is applied to the sixth fulcrum of the second link that rotates around the fourth fulcrum (i.e., a component that moves the sixth fulcrum in the horizontal direction does not occur). Therefore, the moving member rarely moves in the horizontal direction, so that the closed movable cavity mold is rarely opened even if an unexpected external force is applied.

According to the sixth aspect of the invention, when the movable cavity mold has moved to the open position with respect to the stationary cavity mold, a straight line that connects the second fulcrum and the third fulcrum may intersect a straight line that connects the fourth fulcrum and the fifth fulcrum at a point on a vertical line that passes through the sixth fulcrum.

In this case, only a vertical downward force is applied to the sixth fulcrum of the second link that rotates around the fourth fulcrum (i.e., a component that moves the sixth fulcrum in the horizontal direction does not occur). Therefore, the moving member rarely moves in the horizontal direction, so that the closed movable cavity mold is rarely closed even if an unexpected external force is applied.

The rotary blow molding apparatus according to the sixth aspect of the invention may further include:
two securing plates that are disposed on either side of the movable cavity mold at the close position, and have an engagement hole;
securing shafts that are caused to protrude from either side of the movable cavity mold; and
a securing shaft drive mechanism that causes the securing shafts to protrude after the movable cavity mold has been closed, so that the securing shafts are inserted into the holes, and moves the securing shafts backward before the movable cavity mold is opened, so that the securing shafts are removed from the holes.

This mechanically prevents the closed movable cavity mold from being opened. The securing shafts are moved backward before the movable cavity mold is opened, so that the securing shafts are removed from the holes.

In the rotary blow molding apparatus according to the sixth aspect of the invention,
each of the plurality of blow mold may further include a bottom mold that is moved upward or downward relative to the stationary cavity mold and the movable cavity mold; and
the bottom mold may be moved upward or downward by power transmitted from the mold open/close drive mechanism.

This makes it possible to move the bottom mold upward or downward in synchronization with the closing operation or the opening operation of the movable cavity mold.

The rotary blow molding apparatus according to the sixth aspect of the invention may further include:
a cam that rotates around the fifth fulcrum; and
a cam follower that engages the cam to move the bottom mold upward or downward, and
the cam may be rotated by power transmitted from the mold open/close drive mechanism.

This makes it possible to move the bottom mold upward or downward using the cam and the cam follower in synchronization with the closing operation or the opening operation of the movable cavity mold.

The rotary blow molding apparatus according to one aspect of the invention may further include:
step locking sections that are respectively provided in the stationary cavity mold and the movable cavity mold;
a bottom mold support member that supports the bottom mold, and includes the cam follower; and
a shaft that is supported by the bottom mold support member, and is moved in the horizontal direction, the shaft being biased in one movement guide direction, and protruding from one side of the bottom mold support member, and
the shaft may protrude from each side of the bottom mold support member when the movable cavity mold is closed, and be locked by the step locking sections respectively provided in the stationary cavity mold and the movable cavity mold.

The ends of the shaft are thus locked by the step locking sections of the stationary cavity mold and the movable cavity mold 210, so that the bottom mold can be secured during blow molding.

### BRIEF DESCRIPTION OF THE DRAWINGS

FIG. 1 is plan view showing a rotary blow molding apparatus according to one embodiment of the invention.
FIG. 2 is a plan view showing a supply rotary section shown in FIG. 1.
FIG. 3 is a vertical cross-sectional view showing a supply rotary section.
FIG. 4 is a perspective view showing a supply arm.
FIG. 5 is a plan view showing a supply arm.
FIG. 6 is a bottom view showing a supply arm.
FIG. 7 is a rear view showing a supply arm.
FIG. 8 is a view showing a rotation state that occurs immediately before a transfer position where three blow cavities are respectively positioned opposite to three holding sections.
FIG. 9 is a view showing a rotation state at a transfer position where three blow cavities are respectively positioned opposite to three holding sections.
FIG. 10 is a view showing a rotation state that occurs immediately after a transfer position where three blow cavities are respectively positioned opposite to three holding sections.
FIG. 11 is a side view showing a clamped state of a blow mold.
FIG. 12 is a side view showing an open state of a blow mold.
FIG. 13 is a side view showing a movable cavity mold and a mold open/close drive mechanism in an open state.
FIGS. 14A to 14F are views showing a state of a movable cavity mold when moving a moving member by a constant distance from a close state to an open state.
FIGS. 15A to 15F are views showing a state of a movable cavity mold when moving a moving member by a constant distance from an open state to a close state.
FIGS. 16A and 16B are views showing a close state and an open state of a blow mold according to one embodiment of the invention.
FIGS. 17A and 17B are views showing a close state and an open state of a blow mold disclosed in Patent Document 7.
FIG. 18 is a view schematically showing the positions of each link and each fulcrum of a mold open/close drive mechanism when a movable cavity mold is closed.
FIG. 19 is a view schematically showing the positions of each link and each fulcrum of a mold open/close drive mechanism when a movable cavity mold is opened.

### DESCRIPTION OF EXEMPLARY EMBODIMENTS

### EMBODIMENTS

Preferred embodiments of the invention are described in detail below. Note that the following embodiments do not in any way limit the scope of the invention defined by the claims laid out herein. Note that all elements of the following embodiments should not necessarily be taken as essential elements of the invention.

### Basic configuration of rotary blow molding apparatus

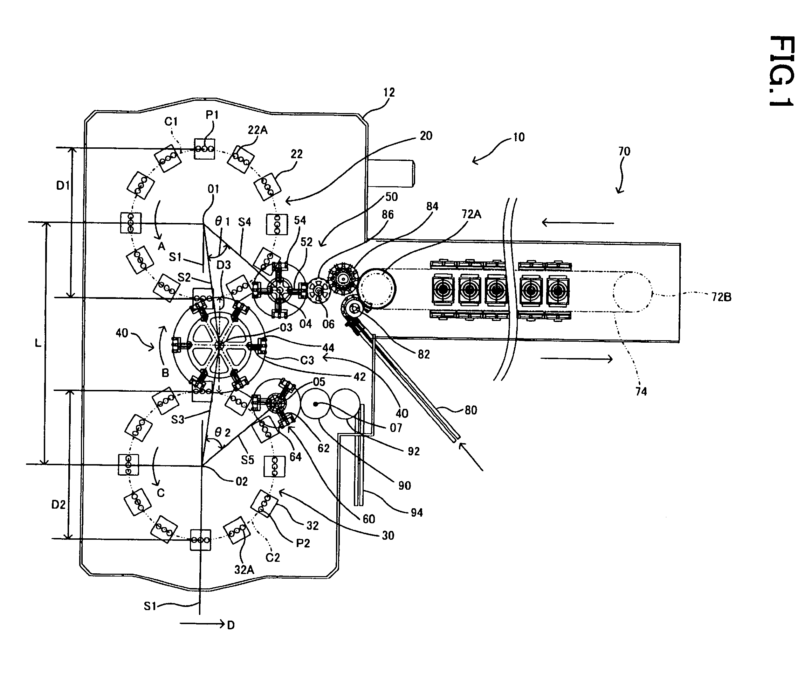

FIG. 1 is a plan view showing the entire configuration of a rotary blow molding apparatus 10 according to one embodiment of the invention. The rotary blow molding apparatus 10 includes a stage 12, a primary blow molding rotary section 20, a secondary blow molding rotary section 30, and a relay rotary section 40, the primary blow molding rotary section 20, the secondary blow molding rotary section 30, and the relay rotary section 40 being provided on the stage 12.

The primary blow molding rotary section 20 rotates a plurality of (e.g., L=12) heated primary blow molds 22 while blow-molding a preform in each of the L primary blow molds 22 to obtain a primary blow-molded article, and shrinking the primary blow-molded article in each of the L primary blow molds 22.

The secondary blow molding rotary section 30 rotates a plurality of (e.g., M=12) secondary blow molds 32 while blow-molding the primary blow-molded article in each of the M secondary blow molds 32 to obtain a secondary blow-molded article.

The relay rotary section 40 is disposed between the primary blow molding rotary section 20 and the secondary blow molding rotary section 30. The relay rotary section 40 transfers the primary blow-molded article from the primary blow molding rotary section 20 to the secondary blow molding rotary section 30 via at least one first holding section 44 that is mounted on each of a plurality of (e.g., N=6) relay arms 42.

At least one primary blow cavity 22A is formed in each primary blow mold 22. In this embodiment, three primary blow cavities 22A are formed in each primary blow mold 22. Therefore, three primary blow-molded articles are simultaneously molded using each primary blow mold 22. In this embodiment, the primary blow molding rotary section 20 includes 36 (=12×3) primary blow cavities 22A.

Three secondary blow cavities 32A are also formed in the secondary blow mold 32 in the same manner as the primary blow mold 22. Therefore, three secondary blow-molded articles are simultaneously molded using each secondary blow mold 32. In this embodiment, the secondary blow molding rotary section 30 includes 36 (=12×3) secondary blow cavities 32A.

The primary blow molding rotary section 20 subjects a preform that is heated in advance to an optimum stretch temperature to primary blow molding in the heated primary blow mold 22 using high-pressure air and a stretching rod to obtain a primary blow-molded article. The primary blow-molded article that has been blow-molded in the primary blow mold 22 adheres due to high-pressure blow air to the surface of the cavity formed in the primary blow mold 22 of which the outer surface is heated, and the body of the primary blow-molded article thermally shrinks when blow air is discharged after blow molding.

The secondary blow molding rotary section 30 subjects the primary blow-molded article that has shrunk and been softened to secondary blow molding (i.e., expands the primary blow-molded article) in the secondary blow mold 32 using only high-pressure air to obtain a secondary blow-molded article (end product), for example.

A heat-resistant container has been molded in this manner using a linear transfer blow molding apparatus. However, only the large rotary blow molding apparatus disclosed in Patent Document 1 has been known as a rotary blow molding apparatus that can be used to mold a heat-resistant container as described above.

In this embodiment, the primary blow-molded article is transferred between the primary blow molding rotary section 20 and the secondary blow molding rotary section 30 using only the relay rotary section 40. Specifically, the relay rotary section 40 can directly receive the primary blow-molded article from the rotating primary blow mold 22 of the primary blow molding rotary section 20 via the rotating relay arm 42, rotate the primary blow-molded article by a given rotation angle, and directly transfer the primary blow-molded article to the rotating secondary blow mold 32 of the secondary blow molding rotary section 30.

### Layout of rotary blow molding apparatus

A circle that corresponds to the rotation path of a primary blow center (i.e., the center of the primary blow cavity 22A) P1 of the primary blow molding rotary section 20, and is defined by a first rotation center O1 and a first diameter D1 of the primary blow molding rotary section 20 is referred to as "first circle C1". A circle that corresponds to the rotation path of a secondary blow center (i.e., the center of the secondary blow cavity 32A) P2 of the secondary blow molding rotary section 30, and is defined by a second rotation center 02 and a second diameter D2 of the secondary blow molding rotary section 30 is referred to as "second circle C2". A circle that is defined by a third rotation center 03 and a third diameter D3 of the relay rotary section 40, and is adjacent to the first circle C 1 and the second circle C2 is referred to as "third circle C3". The third circle C3 is an imaginary transfer path that passes through a position where the relay rotary section 40 receives the primary blow-molded article from the primary blow molding rotary section 20 and a position where the relay rotary section 40 transfers the primary blow-molded article to the secondary blow molding rotary section 30. Since the relay arm 42 moves forward and backward in the radial direction (described later), the actual transfer path of the relay rotary section 40 does not coincide with the third circle C3. The transfer path of the relay rotary section 40 need not be larger than (protrude from) the third circle. Therefore, the third circle is the maximum transfer path of the relay rotary section 40.

In this embodiment, the relationships "D1>D3" and "D2>D3" are satisfied. Specifically, the third diameter D3 of the relay rotary section 40 is smaller than the diameter D1 of the transfer path of the primary blow molding rotary section 20 and the diameter D2 of the transfer path of the secondary blow molding rotary section 30. Since the relay rotary section 40 merely transfers the primary blow-molded article, the third diameter D3 of the relay rotary section 40 is minimized, so that the size of the rotary blow molding apparatus 10 is reduced.

In this embodiment, the relationship "D1=D2" is satisfied. The first diameter D1 and the second diameter D2 need not necessarily be identical. However, when the apparatus necessarily includes the primary blow molding rotary section 20 and the secondary blow molding rotary section 30, most of the components (elements) of the primary blow molding rotary section 20 and the secondary blow molding rotary section 30 can be used in common when the relationship "D1=D2" is satisfied. Specifically, the primary blow molding rotary section 20 and the secondary blow molding rotary section 30 only differ in that the primary blow molding rotary section 20 includes the primary blow mold 22 and the secondary blow molding rotary section 30 includes the secondary blow mold 32. Therefore, the parts of the rotation transfer system can be used in common when the relationship "D1=D2" is satisfied.

In this embodiment, the third rotation center 03 is disposed at a position that is shifted in the direction indicated by an arrow D relative to a first straight line S 1 that passes through the first rotation center O1 and the second rotation center 02, as shown in FIG. 1. When the third rotation center 03 is disposed on the first straight line S 1, the distance L between the first rotation center O1 and the third rotation center 02 is equal to the value "D3+(D1+D2)/2". When the third rotation center 03 is disposed as in this embodiment, the distance L is smaller than the value "D3+(D1+D2)/2". Therefore, the size of the entire apparatus can be reduced reducing the distance L and the diameter D3. Moreover, the following advantages can be obtained by setting the third rotation center 03 as described above.

In this embodiment, the primary blow molding rotary section 20 is rotated in a rotation direction A, the relay rotary section 40 is rotated in a rotation direction B, and the secondary blow molding rotary section 30 is rotated in a rotation direction C. The rotation directions A and C are identical (counterclockwise direction in FIG. 1), and the rotation direction B is opposite to the rotation directions A and C (clockwise direction in FIG. 1). Each rotation direction need not necessarily be set as described above. However, when each rotation direction is set as described above, and the third rotation center 03 is shifted, the dead angle of the primary blow molding rotary section 20 and the secondary blow molding rotary section 30 can be reduced.

Note that the term "dead angle" refers to a rotation angle at which the primary blow mold 22 or the secondary blow mold 32 is opened in the primary blow molding rotary section 20 and the secondary blow molding rotary section 30, and does not contribute to primary blow molding or secondary blow molding.

The primary blow-molded article is transferred to the relay rotary section 40 from the primary blow molding rotary section 20 when the primary blow mold 22 is positioned opposite to the relay arm 42 on a second straight line S2 that connects the first rotation center O1 and the third rotation center 03. In this case, the primary blow mold 22 must be opened.

When the third rotation center 03 is disposed on the first straight line S1, the primary blow-molded article is transferred to the relay rotary section 40 from the primary blow molding rotary section 20 when the primary blow mold 22 is positioned opposite to the relay arm 42 on the first straight line S1. In this embodiment, the primary blow-molded article is transferred to the relay rotary section 40 from the primary blow molding rotary section 20 on the second straight line S2 on the downstream side of the first straight line S1 in the rotation direction A. This makes it possible to delay the start of the dead angle, so that the dead angle can be reduced.

When the third rotation center 03 is disposed on the first straight line S1, the primary blow-molded article is transferred to the secondary blow molding rotary section 30 when the secondary blow mold 32 is positioned opposite to the relay arm 42 on the first straight line S1. In this embodiment, the primary blow-molded article is transferred to the secondary blow molding rotary section 30 on a third straight line (i.e., a straight line that connects the second rotation center 02 and the third rotation center 03) S3 on the upstream side of the first straight line S1 in the rotation direction C. This makes it possible to bring forward the end of the dead angle, so that the dead angle can be reduced.

In this embodiment, a supply rotary section 50 and a removal rotary section 60 are also provided on the stage 12. The supply rotary section 50 includes a plurality of (e.g., four) rotating supply arms 52. Each of the supply arms 52 supplies a preform to the primary blow molding rotary section 20 via at least one (e.g., three) second holding section 54 that holds the preform.

The removal rotary section 60 includes a plurality of (e.g., three) rotating removal arms 62. Each of the removal arms 62 removes the secondary blow-molded article from the secondary blow molding rotary section 30 via at least one (e.g., three) third holding section 64 that holds the secondary blow-molded article.

A fourth rotation center 04 of the supply rotary section 50 and a fifth rotation center 05 of the removal rotary section 60 are disposed at a position that is shifted relative to the first straight line S1 in the direction indicated by the arrow D as compared with the third rotation center 03.

Therefore, the supply rotary section 50 can supply the preform the upstream side of the transfer position (on the second straight line S2) of the primary blow molding rotary section 20 and the relay rotary section 40 in the rotation direction A of the primary blow molding rotary section 20. Moreover, the effective process angle from the supply rotary section 50 to the relay rotary section 40 can be increased, so that a dead angle θ1 from the relay rotary section 40 to the supply rotary section 50 can be reduced.

The supply rotary section 50 supplies the preform to the primary blow molding rotary section 20 at a position on a fourth straight line S4 that connects first rotation center O1 and the fourth rotation center 04. Specifically, the supply rotary section 50 supplies the preform to the primary blow molding rotary section 20 at a position where the primary blow mold 22 is positioned opposite to the supply arm 52. The supply rotary section 50 simultaneously supplies three preforms to the primary blow molding rotary section 20 at the above position. Therefore, the angle θ1 formed by the straight lines S1 and S4 corresponds to the dead angle at which the primary blow mold 22 is at least opened. Since the primary blow mold 22 is actually opened on the upstream side on the first straight line S1, and closed on the downstream side of the fourth straight line S4, the actual dead angle is wider than the angle θ1. The fourth rotation center 04 may be referred to as a second rotation center in connection with only the first rotation center of the primary blow molding rotary section 20.

Likewise, the removal rotary section 60 can remove the secondary blow-molded article on the downstream side of the transfer position (on the third straight line S3) of the secondary blow molding rotary section 30 and the relay rotary section 40 in the rotation direction C of the secondary blow molding rotary section 30. Moreover, the effective process angle from the relay rotary section 40 to the removal rotary section 60 can be increased, so that a dead angle θ2 from the removal rotary section 60 to the relay rotary section 40 can be reduced.

The removal rotary section 60 removes the secondary blow-molded article from the secondary blow molding rotary section 30 at a position on a fifth straight line S5 that connects the second rotation center 02 and the fifth rotation center 05. Specifically, the removal rotary section 60 removes the secondary blow-molded article at a position where the secondary blow mold 32 is positioned opposite to the removal arm 62. The removal rotary section 60 simultaneously removes three secondary blow-molded articles at the above position. Therefore, the angle θ2 formed by the straight lines S3 and S5 corresponds to the dead angle at which the secondary blow mold 32 is at least opened. Since the secondary blow mold 32 is actually opened on the upstream side on the fifth straight line S5, and closed on the downstream side of the third straight line S3, the actual dead angle is wider than the angle θ2. The second rotation center 02 and the fourth rotation center 04 may be referred to as a first rotation center and a second rotation center, respectively, in connection with only the secondary blow molding rotary section 30 and the removal rotary section 60.

In this embodiment, a preform heating device 70 may be provided on the upstream side of the supply rotary section 50. The preform heating device 70 heats the preform to an optimum blow temperature.

The preform heating device 70 transfers preforms that are supported by a plurality of transfer stages secured on a chain 74 that is suspended between sprockets 72A and 72B. A heater and a mirror are disposed on either side of the preform transfer path so that the body of the preform can be heated. The preform rotates in the heating area (not shown) so that the preform is uniformly heated in the circumferential direction.

A chute 80 and a first supply wheel 82 are provided on the upstream side of the preform heating device 70. The preforms slide down the chute 80, and are sequentially supplied to the preform heating device by the first supply wheel 82.

A second supply wheel 84 and a third supply wheel 86 are provided on the downstream side of the preform heating device 70. The preforms that have been heated by the preform heating device 70 are sequentially removed by the second supply wheel 84, transferred by a given rotation angle, and supplied to the third supply wheel 86. The third supply wheel 86 transfers the preforms by a given rotation angle, and sequentially supplies the preforms to the supply rotary section 50. The third supply wheel 86 sequentially supplies the preforms to the supply rotary section 50 when the second holding sections 54 of the supply rotary section 50 are sequentially disposed on a straight line (not shown) that passes through the fourth rotation center 04 of the supply rotary section 50 and a sixth rotation center 06 of the third supply wheel 86. Since the third supply wheel section 86 has a semicircular groove in the periphery, a facing (opposing) positional relationship cannot be obtained in a plurality of locations. Therefore, the third supply wheel 86 sequentially supplies the preforms. The sixth rotation center 06 may be referred to as a third rotation center when the fourth rotation center 04 is referred to as a second rotation center with respect to the first rotation center O1 of the primary blow molding rotary section 20.

A first removal wheel 90, a second removal wheel 92, and a removal rail 94 are disposed on the downstream side of the removal rotary section 60. Since the first removal wheel 90 has a semicircular groove in the periphery, the secondary blow-molded articles are sequentially transferred to the first removal wheel 90 from the removal rotary section 60, and discharged to the removal rail 94 via the second removal wheel 92. The removal rotary section 60 sequentially removes the secondary blow-molded articles when the third holding sections 64 of the removal rotary section 60 are sequentially disposed on a straight line (not shown) that passes through the fifth rotation center 05 of the removal rotary section 60 and a seventh rotation center 07 of the first removal wheel 90. The secondary blow-molded articles are sequentially discharged from the removal rotary section 60 in the same manner as in the case where the preforms are sequentially supplied to the supply rotary section 50. The seventh rotation center 07 may be referred to as a third rotation center when the second rotation center 02 of the secondary blow molding rotary section 30 is referred to as a first rotation center, and the fifth rotation center 05 is referred to as a second rotation center.

### Rotary molded article transfer device

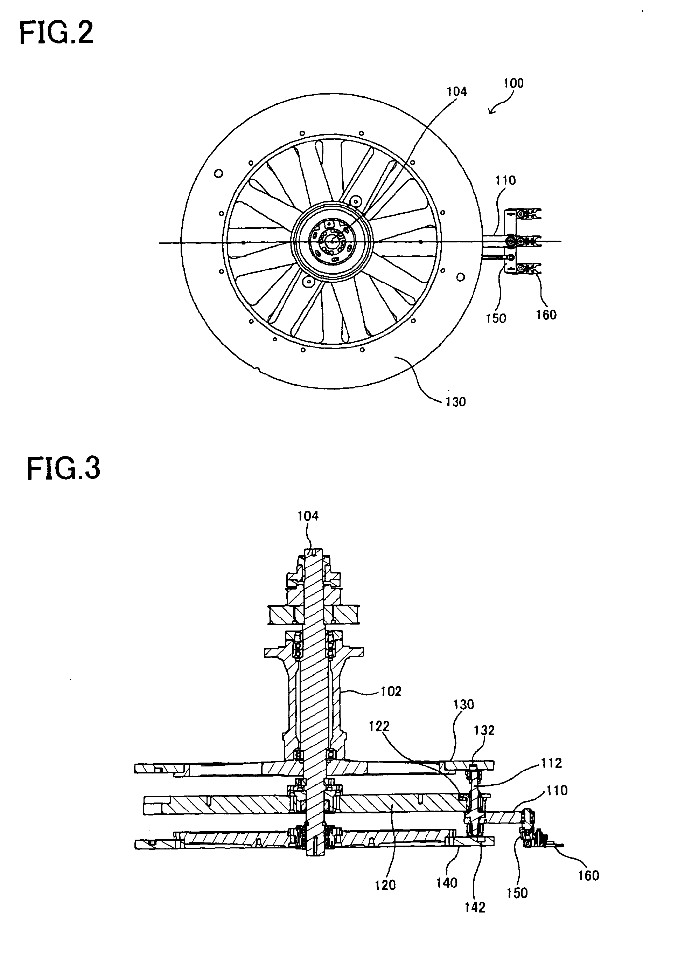

FIG. 2 is a plan view showing a rotary molded article transfer device 100 having a structure common to the relay rotary section 40, the supply rotary section 50, and the removal rotary section 60, and FIG. 3 is a vertical cross-sectional view showing the rotary molded article transfer device 100. Although only one transfer arm 110 is shown in FIGS. 2 and 3, a necessary number of transfer arms 110 may be disposed at equal angular intervals depending on the application of the relay rotary section 40, the supply rotary section 50, the removal rotary section 60, and the like.

The rotary molded article transfer device 100 shown in FIGS. 2 and 3 includes a rotary shaft 104 that is rotatably supported by a bearing section 122. A rotating plate 120 is secured on the rotary shaft 104. A first cam plate 130 is secured on the bearing section 122 in parallel with the rotating plate 120 on one side (e.g., upper side) of the rotating plate 120. A second cam plate 140 is provided in parallel with the rotating plate 120 on the other side (e.g., lower side) of the rotating plate 120. The first cam plate 130 and the second cam plate 140 are fixed so that the first cam plate 130 and the second cam plate 140 do not rotate together with the rotary shaft 104.

A first cam 132 (cam groove) is continuously formed in the bottom surface of the first cam plate 130 in the circumferential direction, for example. Likewise, a second cam 142 (cam groove) is continuously formed in the upper surface of the second cam plate 140 in the circumferential direction, for example.

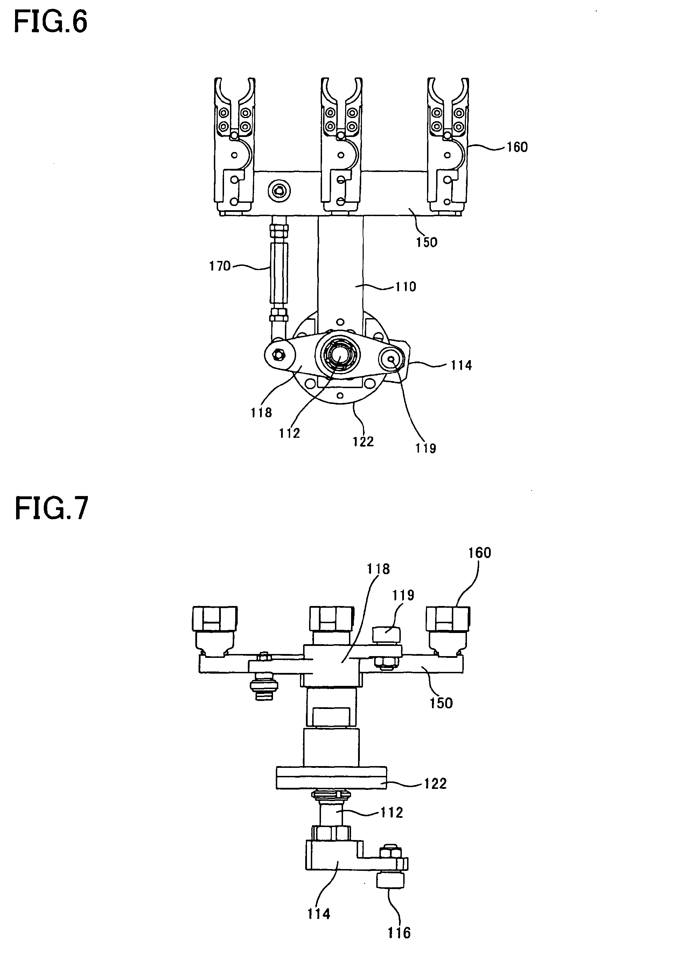

As shown in FIGS. 2 to 7, a rotary arm 150 is rotatably provided at the free end of the transfer arm 110. At least one (e.g., three) holding section 160 protrudes from the rotary arm 150 in the direction that perpendicularly intersects the direction in which the rotary arm 150 extends (i.e., the longitudinal direction of the rotary arm 150). The holding section 160 functions as a grip member that can be opened and closed, and holds the neck of the preform, the primary blow-molded article, or the secondary blow-molded article. The molded articles are held by the three holding sections 160 from the upstream side to the downstream side in the rotation direction of the rotary molded article transfer device.

A control arm 170 that controls the angle of the rotary arm 150 relative to the transfer arm 110 is provided, one end of the control arm 170 being rotatably secured on the rotary arm 150. The base end of the transfer arm 110 and the other end of the control arm 170 are rotatably supported by a connection member 118. The connection member 118 is rotatably supported by the rotating plate 120 (described later). A four-bar linkage is formed by the transfer arm 110, the connection member 118, the rotary arm 150, and the control arm 170.

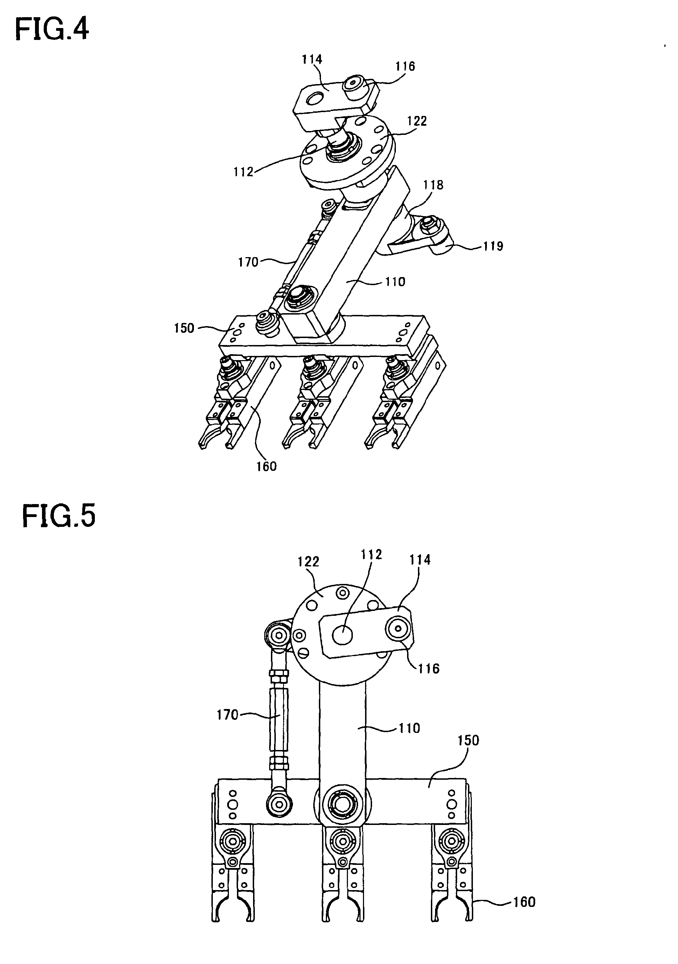

As shown in FIG. 3, a shaft 112 is secured on the base end of the transfer arm 110, and supported by the bearing section 122 disposed in the rotating plate 120 so that the shaft 112 is rotatably supported by the rotating plate 120. Note that the rotating plate 120 is omitted in FIGS. 4 to 7.

As shown in FIGS. 4 to 7, a securing member 114 is secured on one end (e.g., upper end) of the shaft 112. The securing member 114 has a first cam follower 116 that is guided to the first cam 132 (FIG. 3) at a position away from the center of the shaft 112. The first cam follower 116 may be formed by a roller or the like that is pivotally supported by the securing member 114.

As shown in FIGS. 4 to 7, the connection member 118 is rotatably supported by the other end (e.g., lower end) of the shaft 112. A second cam follower 119 that is guided to the second cam 142 (FIG. 3) is provided at a position away from the center of the shaft 112 of the connection member 118. The second cam follower 119 may be formed by a roller or the like that is pivotally supported by the connection member 118. The control arm 170 is rotatably supported by the connection member 118 at a position opposite to the second cam follower 119 with respect to the shaft 112.

### Operation of rotary molded article transfer device

The rotary molded article transfer device 100 is applied to one of two rotary molded article transfer devices, each of the two rotary molded article transfer devices rotating at least one molded article, and transferring the at least one molded article at each of a plurality of positions at equal angular intervals around the rotation center. In the embodiment shown in FIG. 1, each of the relay rotary section 40, the supply rotary section 50, and the removal rotary section 60 may include the rotary molded article transfer device 100.

The rotary molded article transfer device 100 holds the neck of a preform, a primary molded article, or a secondary molded article using the holding section 160 (e.g., three holding sections 160) secured on the transfer arm 110, and rotates the preform, the primary molded article, or the secondary molded article around the rotary shaft 104 due to rotation of the rotary shaft 104. The rotation position of the transfer arm 110 is controlled by the first cam follower 116 that engages the first cam 132. The control arm 170 is driven by the second cam follower 119 that engages the second cam 142, so that the angle of the rotary arm 150 relative to the transfer arm 110 is controlled.

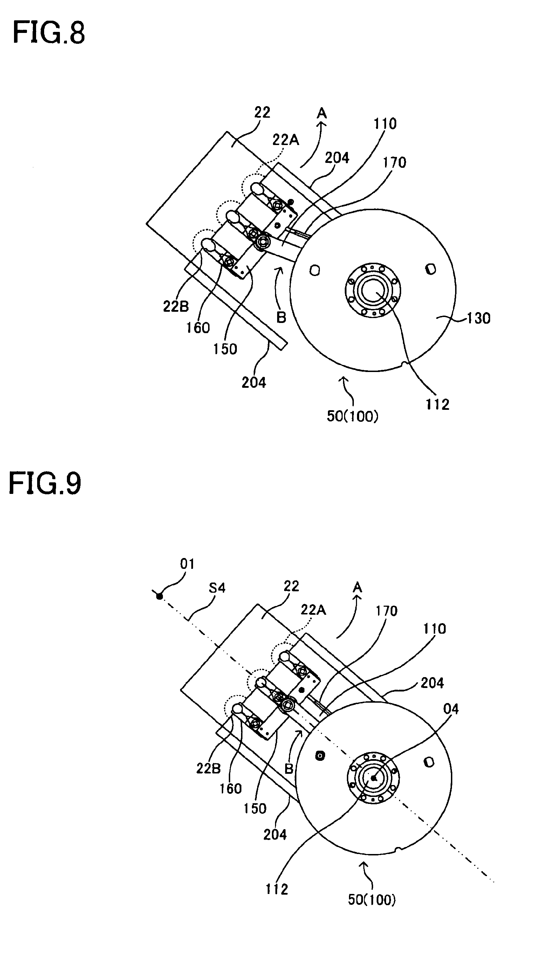

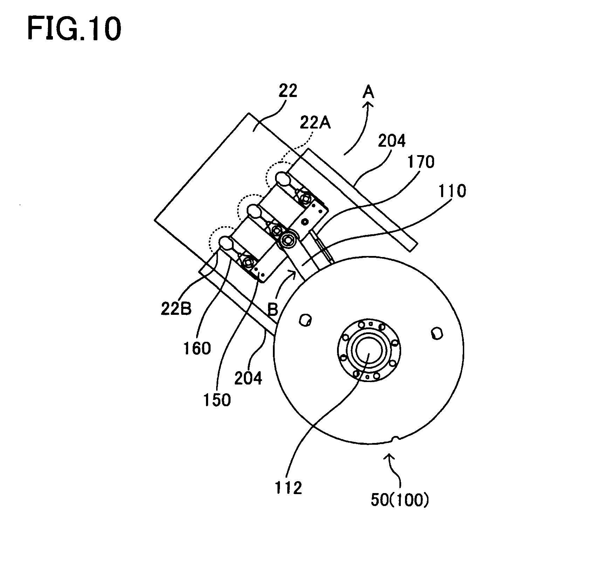

The rotary molded article transfer device 100 is characterized by control at the transfer position. The details thereof are described below with reference to FIGS. 8 to 10. In FIGS. 8 to 10, the rotary molded article transfer device 100 is applied to the supply rotary section 50 shown in FIG. 1. FIG. 8 shows the rotation position immediately before the preform is transferred from the supply rotary section 50 (100) to the primary blow mold 22 that is rotated around the first rotation center O1 shown in FIG. 1 in the direction indicated by the arrow A. FIG. 9 shows the rotation position where the preform is transferred from the supply rotary section 50 (100) to the primary blow mold 22. FIG. 10 shows the rotation position immediately after the preform has been transferred from the supply rotary section 50 (100) to the primary blow mold 22.

In FIGS. 8 to 10, at least one (e.g., three) holding section 160 is reciprocated in a horizontal plane by a stroke that allows transfer in the direction parallel to the straight line S4, and positioned opposite to at least one (e.g., three) primary blow cavity 22A (see FIG. 8) of the primary blow mold 22 of the primary blow molding rotary section 20 within a given rotation angle (FIGS. 8 to 10) around the transfer position (FIG. 9) where the transfer arm 110 is disposed along the straight line S4 that passes through the first rotation center O1 of the primary blow molding rotary section 20 and the fourth rotation center 04 of the supply rotary section 50.

The expression "positioned opposite to at least one (e.g., three) primary blow cavity 22A" refers to a state in which the three primary blow cavities 22A are directly positioned opposite to the three holding sections 160, respectively (see FIG. 8 to 10). In this case, it is necessary to maintain a state in which a half parting surface 22B of the opened primary blow mold 22 is parallel to the connection member 118 in FIG. 8 to 10.

The holding sections 160 protrude to the outside to a maximum extent in the radial direction at the transfer position shown in FIG. 9 as compared with FIGS. 8 and 10. This makes it possible to simultaneously transfer three primary blow-molded articles from the three holding sections 160 to the three primary blow cavities 22A. Specifically, the transfer arm 110 is moved forward by a given stroke in the direction parallel to the straight line S4 shown in FIG. 9 during rotation from a state shown in FIG. 8 to a state shown in FIG. 9. The transfer arm 110 is moved backward by a given stroke in the direction parallel to the straight line S4 shown in FIG. 9 during rotation from a state shown in FIG. 9 to a state shown in FIG. 10.

The first and second cam followers 116 and 119 that engage the first and second cams 132 and 142 control the posture of the transfer arm 110 and the control arm 170 shown in FIGS. 8 to 10.

If the above facing (opposing) state is maintained within a given angular range, the primary blow-molded articles are not rotated within the three holding sections 160 during the transfer process shown in FIG. 8 to 10. Therefore, the neck of the molded article is not damaged by the holding section 160, so that the appearance of the product can be improved. This effect can also be obtained when applying the rotary molded article transfer device 100 to the removal rotary section 60 shown in FIG. 1.

When applying the rotary molded article transfer device 100 to the relay rotary section 40 shown in FIG. 1, the following prominent effect can be obtained while preventing damage to the neck of the molded article. Specifically, the position of the parting line that appears on the primary blow-molded article during the first blow molding step coincides with the position of the parting line that appears on the secondary blow-molded article. This significantly improves the appearance of the resulting heat-resistant container (end product). This effect is achieved since the primary blow-molded article is not rotated within the holding section 160 when transferring the primary blow-molded article from the primary blow molding rotary section 20 to the secondary blow molding rotary section 30.

When applying the rotary molded article transfer device 100 to both the relay rotary section 40 and the supply rotary section 50 shown in FIG. 1, the dead angle of the primary blow molding rotary section 20 can be further reduced. This effect is achieved when simultaneously transferring the preforms or the primary blow-molded articles from a plurality of holding sections 160 secured on one transfer arm 110. When simultaneously transferring three preforms or three primary blow-molded articles, the primary blow molding rotary section 20 has at least the angle θ1 shown in FIG. 1 as the dead angle. As shown in FIG. 8, the transfer position occurs when the center holding section 160 among the three holding sections 160 is disposed on the straight line S4 that passes through the rotation centers O1 and O4. In FIG. 1, at least the primary blow mold is opened (i.e., dead angle) between the first transfer position located on the straight line S1 and the second transfer position located on the straight line S4.

As a comparative example, the molded articles may be sequentially transferred to the three primary blow cavities 22A of the primary blow mold 22 using three transfer arms 110. In this case, the primary blow mold 22 must have been opened when the primary blow cavity 22A of the primary blow mold 22 that is positioned at the front end in the transfer direction has reached the straight line S1 shown in FIG. 1. In this embodiment, it suffices that the primary blow mold 22 have been opened when the primary blow cavity 22A of the primary blow mold 22 that is positioned at the center has reached the straight line S1 shown in FIG. 1. Therefore, the mold open timing can be delayed by the pitch between the adjacent cavities.

In the comparative example, the primary blow mold 22 must be open until the primary blow cavity 22A of the primary blow mold 22 that is positioned at the rear end in the transfer direction reaches the straight line S1 shown in FIG. 1. In this embodiment, it suffices that the primary blow mold 22 be open until the primary blow cavity 22A of the primary blow mold 22 that is positioned at the center reaches the straight line S1 shown in FIG. 1. Therefore, the mold close timing can be brought forward by the pitch between the adjacent cavities. The dead angle of the primary blow molding rotary section 20 can thus be reduced.

When applying the rotary molded article transfer device 100 to both the relay rotary section 40 and the removal rotary section 60 shown in FIG. 1, the dead angle of the secondary blow molding rotary section 30 can be reduced in the same manner as described above.

### Blow mold

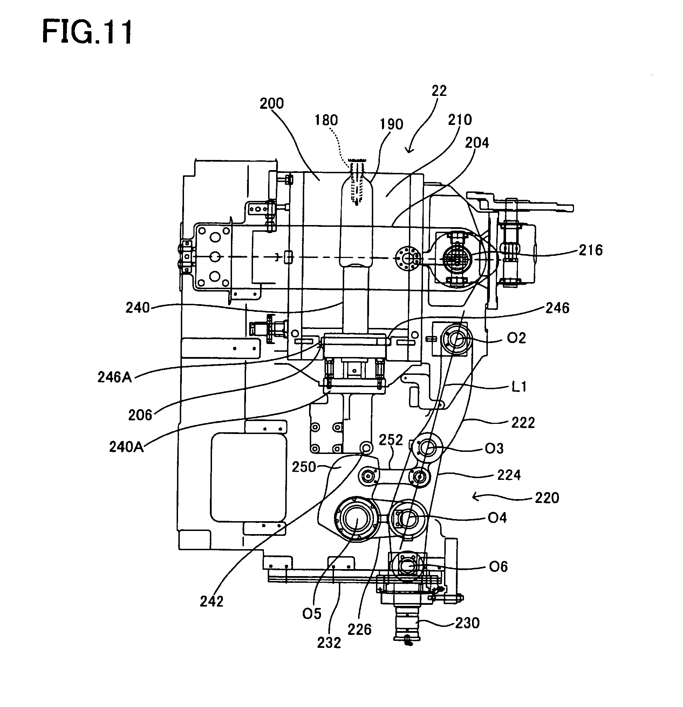

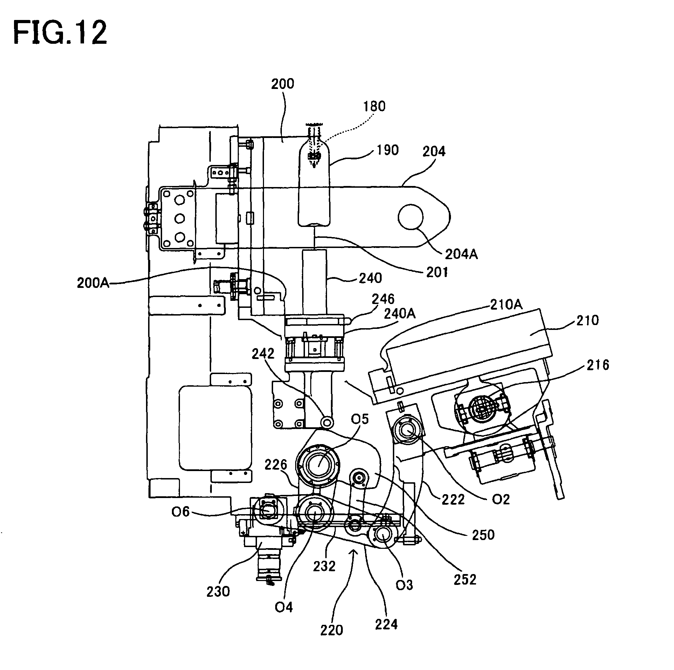

FIGS. 11 and 12 shows a clamped state and an open state of the primary blow mold 22 that blow-molds a preform 180 into a primary blow-molded article 190. The primary blow mold 22 includes a stationary cavity mold (first half mold) 200, and a movable cavity mold (second half mold) 210. The stationary cavity mold 200 is secured to have a vertical parting surface 201. The movable cavity mold 210 is driven (opened or closed) relative to the stationary cavity mold 200 by a mold open/close drive mechanism (link mechanism) 220. The primary blow mold 22 is referred to as an alligator blow mold. The secondary blow mold 32 is configured in the same manner as the primary blow mold 22.

In this embodiment, the primary blow mold 22 is set to the open state shown in FIG. 12 at least within the dead angle θ1 shown in FIG. 1. This makes it possible to rotate and transfer the preform 180 or the primary blow-molded article 190 while preventing a situation in which the first holding section 44 of the relay rotary section 40 or the second holding section 54 of the supply rotary section 50 interferes with the primary blow mold 22.

### Blow mold open/close mechanism

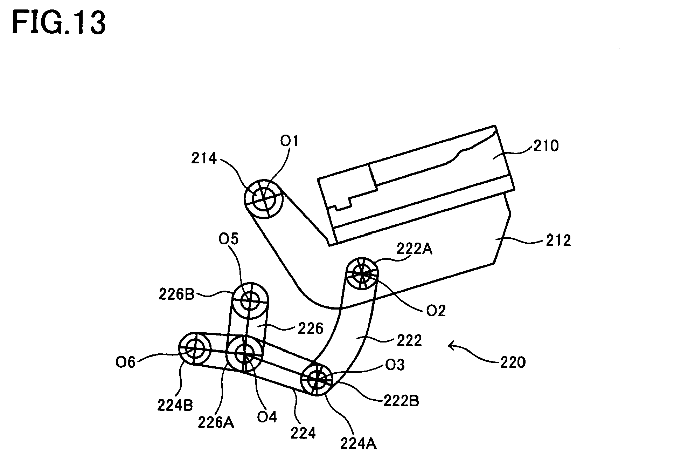

FIG. 13 shows the movable cavity mold 210 in the open state shown in FIG. 12, and the mold open/close drive mechanism 220 that opens and closes the movable cavity mold 210. The movable cavity mold 210 is secured on a mold support member 212. The mold support member 212 is rotatably supported by a stationary horizontal shaft 214 (first fulcrum O1).

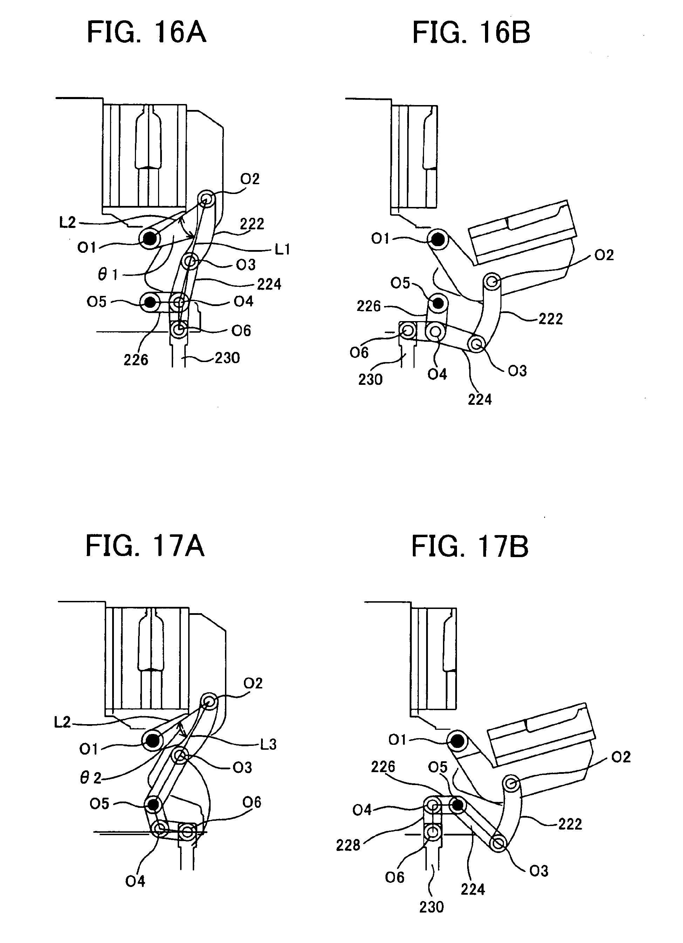

The mold open/close drive mechanism 220 includes a first link 222, a second link 224, and a third link 226. The first link 222 has a first end 222A and a second end 222B. The first end 222A is rotatably connected to a second fulcrum 02 provided in the movable cavity mold 210. The second link 224 has a third end 224A and a fourth end 224B. The third end 224A is rotatably connected to a third fulcrum 03 provided at the second end 222B of the first link 222. The third link 226 has a fifth end 226A and a sixth end 226B. The fifth end 226A is rotatably connected to a fourth fulcrum 04 provided between the third end 224A and the fourth end 224B of the second link 224. The sixth end 226B is rotatably connected to a stationary fifth fulcrum O5. The third link 226 rotates around the fifth fulcrum O5. As shown in FIGS. 11 and 17, the mold open/close drive mechanism 220 includes a moving member 230 that reciprocates a sixth fulcrum 06 provided at the fourth end 224B of the second link 224 across a vertical line (not shown) that passes through the fifth fulcrum 05. FIG. 11 shows a state in which the sixth fulcrum 06 is moved to the right, and FIG. 12 shows a state in which the sixth fulcrum 06 is moved to the left. For example, the moving member 230 is driven by a motor or the like, and moves along a horizontal linear guide 232.

In order to smoothly open and close the movable cavity mold 210, the first fulcrum O1 and the fifth fulcrum 05 are positioned in a plane (or the vicinity thereof) along the vertical parting surface 201 of the stationary cavity mold 200.

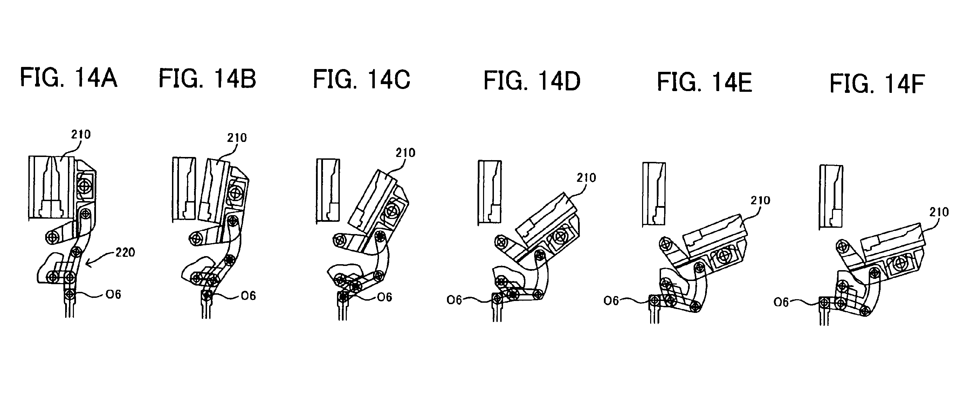

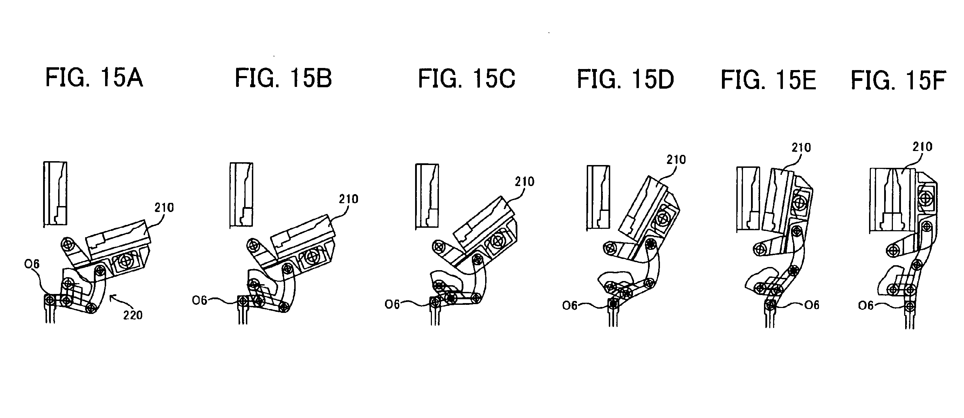

FIGS. 14A to 14F and FIGS. 15A to 15F show the open/close state of the blow mold 22 when moving the moving member 230 by a constant distance. FIGS. 14A to 14F show a mold opening operation from the close state shown in FIG. 11 to the open state shown in FIG. 12. FIGS. 15A to 15F show a mold closing operation from the open state shown in FIG. 12 to the close state shown in FIG. 11. The movable cavity mold 210 can thus be opened and closed relative to the stationary cavity mold 200 by the function of the mold open/close drive mechanism 220 by moving the sixth fulcrum 06 using the moving member 230.

Moreover, the mold opening amount of the movable cavity mold 210 between FIG. 14A and FIG. 14B (initial stage) and the mold opening amount of the movable cavity mold 210 between FIG. 14E and FIG. 14F (final stage) are smaller than the mold opening amount of the movable cavity mold 210 between FIG. 14A and FIG. 14B (middle stage). FIGS. 15A to 15F show the same tendency. Specifically, the moving speed of the movable cavity mold 210 is reduced in the final stage of the mold opening operation and the mold closing operation of the movable cavity mold 210. Therefore, an impact that occurs at the end of the mold opening/closing operation can be reduced.

### Close state of movable cavity mold

An operation performed in the close state shown in FIG. 11 is described below. The stationary first fulcrum O1 is normally positioned in a plane (or the vicinity thereof) along the vertical parting surface 201 of the stationary cavity mold 200, as described above. The stationary fifth fulcrum 05 need not be positioned in a plane along the vertical parting surface 201 of the stationary cavity mold 200, but is advantageously positioned in the vicinity of a plane along the vertical parting surface 201 of the stationary cavity mold 200 from the viewpoint of design. Therefore, all of the second fulcrum 02, the third fulcrum 03, and the sixth fulcrum 06 positioned on the first link 222 and the second link 224 are shifted to the movable cavity mold 210 with respect to the stationary first fulcrum O1 and the stationary fifth fulcrum 05 when the moving member 230 moves to the right relative to the vertical line that passes through the fifth fulcrum 05 (close state). Therefore, the first second link 222 and the second link 224 approach the vertical line. This increases resistance against an external force that opens the closed movable cavity mold 210.

It is more preferable that the second fulcrum 02, the third fulcrum 03, and the fourth fulcrum 04 be aligned along the straight line L1. In this case, the closed movable cavity mold 210 is rarely opened due to a toggle effect even if an external force is applied. Since the closing amount of the movable cavity mold 210 is small with respect to the movement of the moving member 230 immediately before the second fulcrum 02, the third fulcrum 03, and the fourth fulcrum 04 are aligned along the straight line L1, the closing speed of the movable cavity mold 210 can be reduced immediately before the movable cavity mold 210 is closed.

The effect according to this embodiment that prevents the closed movable cavity mold 210 from being opened due to an external force is prominent as compared with the invention disclosed in Patent Document 7. The details thereof are described below by comparing FIGS. 16A and 16B with FIGS. 17A and 17B.

FIGS. 16A and 16B respectively show a close state and an open state according to this embodiment, and FIGS. 17A and 17B respectively show a close state and an open state according to Patent Document 7. The structure disclosed in Patent Document 7 is described below using the reference symbols shown in FIGS. 16A and 16B for convenience of illustration. As shown in FIGS. 17A and 17B, first to fourth links 222 to 228 are provided. The second link 224 and the third link 226 rotate around a fifth fulcrum O5. The above features differ from the features shown in FIGS. 16A and 16B. A sixth fulcrum 06 is moved using a moving member in the same manner as in FIGS. 16A and 16B. In FIGS. 16A and 16B and FIGS. 17A and 17B, the positions of the stationary fulcrums O1 and O5, the stroke of the moving member 230, and the open angle of the movable cavity mold 210 are set to be identical.

In FIG. 16A, the second fulcrum 02, the third fulcrum 03, and the fourth fulcrum 04 are aligned along the straight line L1 in order to obtain a toggle effect, as described above. In FIG. 17A, the second fulcrum 02, the third fulcrum 03, and the fifth fulcrum 05 are aligned along a straight line L3 in order to obtain a toggle effect. The fulcrum 05 is stationary. In FIGS. 16A and 17A, a straight line L2 connects the first fulcrum O1 and the second fulcrum 02.

An angle θ1 formed by the straight lines L1 and L2 in FIG. 16A is significantly greater than an angle θ2 formed by the straight lines L2 and L3 in FIG. 17A. Specifically, since the straight line L3 passes through the stationary fulcrum 05 in FIG 17A, the angle formed by the straight line L2 and the straight line L1 that passes through the fulcrum 04 positioned on the right side of the stationary fulcrum 05 in FIG. 16A is necessarily greater than the angle formed by the straight lines L2 and L3 in FIG. 17A.

In FIG. 16A, since the straight line L1 approaches the vertical line, an external force that moves the first link 222 and the second link 224 sideways (i.e., an external force that opens the closed movable cavity mold 210) increases. This prevents the closed movable cavity mold 210 from being opened even if an unexpected external force is applied in addition to the toggle effect.

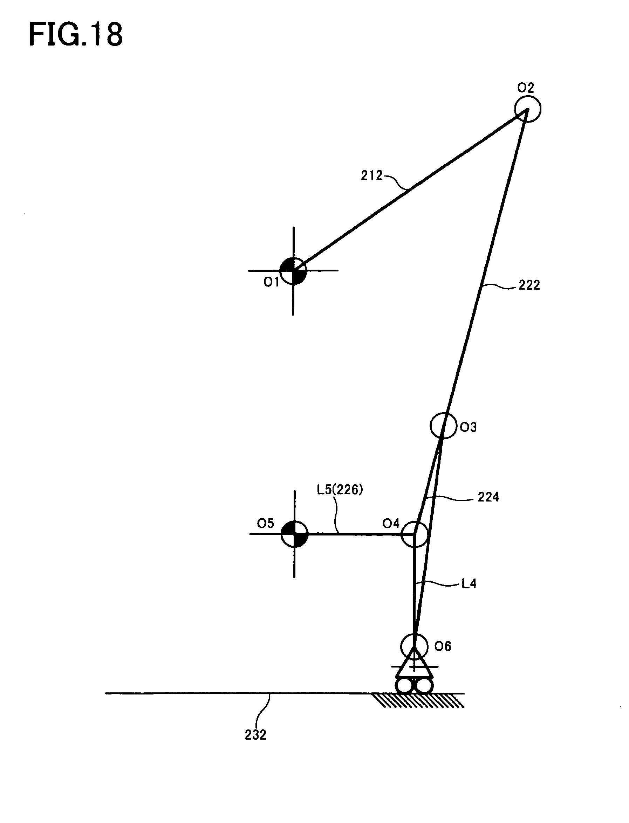

FIG. 18 is a view schematically showing the positions of each link and each fulcrum of the mold open/close drive mechanism 220 when the movable cavity mold 210 is closed. As shown in FIG. 18, when the movable cavity mold 210 has moved to the close position with respect to the stationary cavity mold 200, a straight line L4 that connects the fourth fulcrum 04 and the sixth fulcrum 06 substantially perpendicularly intersects a straight line L5 that connects the fourth fulcrum 04 and the fifth fulcrum O5. In this case, only a vertical downward force is applied to the sixth fulcrum 06 of the second link 224 that rotates around the fourth fulcrum 04 (i.e., a component that moves the sixth fulcrum 06 in the horizontal direction does not occur). Therefore, the moving member 230 rarely moves in the horizontal direction, so that the closed movable cavity mold 210 is rarely opened even if an unexpected external force is applied.

### Open state of movable cavity mold

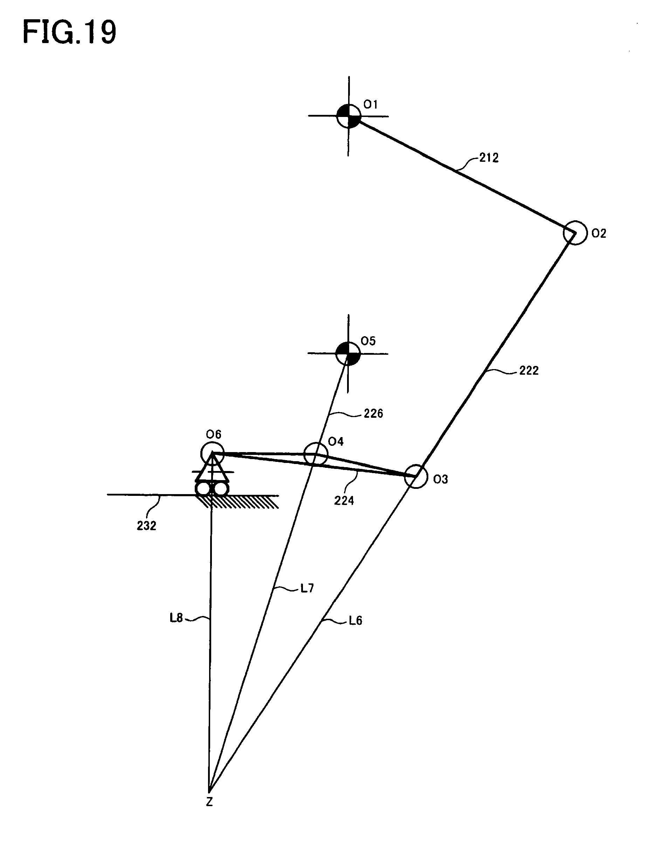

In this embodiment, the movable cavity mold 210 in an open state does not move in the mold closing direction even if an unexpected external force is applied. FIG. 19 shows the design principle. FIG. 19 is a view schematically showing the positions of each link and each fulcrum of the mold open/close drive mechanism 220 when the movable cavity mold 210 is opened. In FIG. 19, a straight line L6 that connects the second fulcrum 02 and the third fulcrum 03 intersects a straight line L7 that connects the fourth fulcrum 04 and the fifth fulcrum 05 at a point Z on a vertical line L8 that passes through the sixth fulcrum 06. In this embodiment, the lengths of the first link 222, the second link 224, and third link 226, the positions of the fulcrums O1 to 06, and the stroke of the moving member 230 of the mold open/close drive mechanism 220 are designed so that the conditions shown in FIGS. 18 and 19 are satisfied. In this case, only a vertical downward force is applied to the sixth fulcrum 06 of the second link 224 that rotates around the fourth fulcrum 04 (i.e., a component that moves the sixth fulcrum 06 in the horizontal direction does not occur) in the same manner as in FIG. 18. Therefore, the moving member 230 rarely moves in the horizontal direction, so that the opened movable cavity mold 210 is rarely closed even if an unexpected external force is applied.

### Clamping of blow mold

As shown in FIGS. 8 to 12, two securing plates 204 protrude from the blow mold 22. A hole 204A (see FIG. 12) is formed in the free end of each securing plate 204. A securing shaft 216 and 216 that can protrude outward is provided on each side of the movable cavity mold 210. The securing shafts 216 are caused to protrude after the movable cavity mold 210 has been closed, and inserted into the holes 204A formed in the securing plates 204. This mechanically prevents the closed movable cavity mold 210 from being opened. The securing shafts 216 are moved backward (removed) from the holes 204A before the movable cavity mold 210 is opened.

A securing shaft drive mechanism that drives the securing shafts 216 may include a cam that is provided in part or the entirety of the circumferential path in which the blow mold 22 is closed along the moving path of the blow mold 22 of the primary blow molding rotary section 20 shown in FIG. 11. Specifically, the securing shafts 216 and 216 are driven by a cam follower that engages the cam. Note that the forward movement (protrusion) or the backward movement of the securing shafts 216 may be implemented by a biasing member (e.g., spring). A similar securing shaft drive mechanism may be provided in the secondary blow molding rotary section 30. After the blow mold 22 has been closed, and the securing shafts 216 have been moved forward (protruded), a clamping piston (not shown) is driven, so that the blow mold 22 is clamped.

### Driving of bottom mold

In this embodiment, a bottom mold 240 that is clamped to the stationary cavity mold 200 and the movable cavity mold 210 may be provided, as shown in FIG. 12. The bottom mold 240 may be driven by the mold open/close drive mechanism 220. This makes it possible to move the bottom mold 240 upward or downward in synchronization with the closing operation or the opening operation of the movable cavity mold 210. In this case, the mold open/close drive mechanism 220 includes a cam 250 that rotates around the fifth fulcrum O5. The cam 250 is rotated by a cam drive link 252 connected to the third fulcrum 03, for example.

As shown in FIGS. 11 and 12, the bottom mold 240 is supported by a bottom mold support member 240A provided with a cam follower 242 that engages the cam 250. The bottom mold 240 is moved upward in the close state shown in FIG. 11, and is moved downward in the open state shown in FIG. 12. The bottom mold 240 and the bottom mold support member 240A may be moved upward or downward by the cam follower 242 that engages the rotary cam 250.

In order to secure the bottom mold 240, a step locking section 200A is provided in the stationary cavity mold 200, a step locking section 210A is provided in the movable cavity mold 210, and a shaft 246 is provided in the bottom mold support member 240A. In the open state shown in FIG. 12, only one end (right end in FIG. 12) of the shaft 246 protrudes from the side of the bottom mold support member 240A due to a biasing member (e.g., spring). In the close state shown in FIG. 11, the shaft 246 that protrudes from one side of the bottom mold support member 240A is pressed by the step locking section 210A of the movable cavity mold 210, so that the other end 246A of the shaft 246 protrudes from the side of the bottom mold support member 240A. The ends of the shaft 246 are thus locked by the step locking section 200A of the stationary cavity mold 200 and the step locking section 210A of the movable cavity mold 210, so that the bottom mold 240 can be secured.

Although only some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention. Any term cited with a different term having a broader meaning or the same meaning at least once in the specification and the drawings can be replaced by the different term in any place in the specification and the drawings. For example, several aspects of the invention may be applied to a rotary molded article transfer device that transfers a molded article between two rotary mold blow molding sections 20 and 30 (see FIG. 1), and a rotary molded article transfer device that transfers a molded article to a single rotary mold blow molding section, or a rotary molded article processing section (i.e., a rotary molded article transfer device that does not include a transfer arm) (e.g., rotary heating section) using a transfer arm.

### EXPLANATION OF SYMBOLS

10: rotary blow molding apparatus, 12: stage, 20: primary blow molding rotary section, 22: primary blow mold, 22A: primary blow cavity, 30: secondary blow molding rotary section, 32: secondary blow mold, 32a: secondary blow cavity, 40: relay rotary section, 42: relay arm, 44: first holding section, 50: supply rotary section, 52: supply arm, 54: second holding section, 60: removal rotary section, 62: removal arm, 64: third holding section, 70: preform heating device, 72A, 72B: sprocket, 74: chain, 80: chute, 82: first supply wheel, 84: second supply wheel, 86: third supply wheel, 90: first removal wheel, 92: second removal wheel, 94: removal rail, 100: rotary molded article transfer device, 110: transfer arm, 118: connection member, 120: rotating plate, 130: first cam plate, 140: second cam plate, 150: rotary arm, 170: control arm, 180: preform, 190: primary blow-molded article, 200: stationary cavity mold (first half cavity mold), 200A: step locking section, 210: movable cavity mold (second half cavity mold), 210a: step locking section, 214: stationary horizontal shaft, 220: mold open/close drive mechanism (link mechanism), 222: first link, 222A: first end, 222B: second end, 224: second link, 224A: third end, 224B: fourth end, 226: third link, 226A: the fifth end, 226B: sixth end, 230: moving member, 240: bottom mold, 240A: bottom mold support member, 242: cam follower, 246: shaft, 250: cam, O1: first fulcrum (stationary), O2: second fulcrum, O3: third fulcrum, O4: fourth fulcrum, O5: fifth fulcrum (stationary), O6: sixth fulcrum, O1 to O3: first to third rotation centers, O1, O4, O6: first to third rotation centers, 02, O5, O7: first to third rotation centers

## Claims

1. A rotary blow molding apparatus comprising:
a primary blow molding rotary section that rotates a plurality of heated primary blow molds while blow-molding a preform in each of the plurality of primary blow molds to obtain a primary blow-molded article, and shrinking the primary blow-molded article in each of the plurality of primary blow molds;
a secondary blow molding rotary section that rotates a plurality of secondary blow molds while blow-molding the primary blow-molded article in each of the plurality of secondary blow molds to obtain a secondary blow-molded article; and
a relay rotary section that is disposed between the primary blow molding rotary section and the secondary blow molding rotary section, and transfers the primary blow-molded article from the primary blow molding rotary section to the secondary blow molding rotary section via at least one first holding section that is mounted on each of a plurality of rotating relay arms.

2. The rotary blow molding apparatus according to claim 1,
the relationships "D1>D3" and "D2>D3" being satisfied when a circle that corresponds to a rotation path of a primary blow center of the primary blow molding rotary section, and is defined by a first rotation center and a first diameter D1 of the primary blow molding rotary section is referred to as a first circle, a circle that corresponds to a rotation path of a secondary blow center of the secondary blow molding rotary section, and is defined by a second rotation center and a second diameter D2 of the secondary blow molding rotary section is referred to as a second circle, and a circle that is defined by a third rotation center and a third diameter D3 of the relay rotary section, and is adjacent to the first circle and the second circle is referred to as a third circle.

3. The rotary blow molding apparatus according to claim 2,
the relationship "D1=D2" being satisfied.

4. The rotary blow molding apparatus according to claim 2 or 3,
the third rotation center being disposed at a position that is shifted in one direction relative to a first straight line that passes through the first rotation center and the second rotation center.

5. The rotary blow molding apparatus according to claim 4,
the primary blow molding rotary section and the secondary blow molding rotary section being rotated in a first direction, and the relay rotary section being rotated in a second direction opposite to the first direction.

6. The rotary blow molding apparatus according to claim 5, further comprising:
a supply rotary section that supplies the preform to the primary blow molding rotary section via at least one second holding section that is mounted on each of a plurality of rotating supply arms,
a fourth rotation center of the supply rotary section being disposed at a position that is shifted relative to the first straight line in the one direction as compared with the third rotation center.

7. The rotary blow molding apparatus according to claim 6, further comprising:
a removal rotary section that removes the secondary blow-molded article from the secondary blow molding rotary section via at least one third holding section that is mounted on each of a plurality of rotating removal arms,
a fifth rotation center of the removal rotary section being disposed at a position that is shifted relative to the first straight line in the one direction as compared with the third rotation center.

8. The rotary blow molding apparatus according to any one of claims 1 to 7,
a plurality of the first holding sections being mounted on each of the plurality of relay arms, and the relay rotary section simultaneously receiving a plurality of the primary blow-molded articles from the primary blow molding rotary section, and transferring the plurality of primary blow-molded articles to the secondary blow molding rotary section via the plurality of first holding sections.

9. The rotary blow molding apparatus according to any one of claims 5 to 8,
a plurality of the second holding sections being mounted on each of the plurality of supply arms, and the supply rotary section simultaneously transferring a plurality of the preforms to the primary blow molding rotary section via the plurality of second holding sections.

10. The rotary blow molding apparatus according to claim 9,
the plurality of preforms being sequentially supplied to the plurality of second holding sections.

11. The rotary blow molding apparatus according to any one of claims 6 to 10,
the removal rotary section including a plurality of the third holding sections mounted on each of the plurality of removal arms, the removal rotary section simultaneously receiving a plurality of the secondary blow-molded articles from the secondary blow molding rotary section via the plurality of third holding sections.

12. The rotary blow molding apparatus according to claim 11,
the plurality of secondary blow-molded articles being sequentially discharged from the plurality of third holding sections.

13. The rotary blow molding apparatus according to claim 1,
at least one primary blow-molded article being transferred from the primary blow molding rotary section to one relay arm among the plurality of relay arms at a first transfer position where the one relay arm is disposed along a first straight line that passes through a first rotation center and a third rotation center, and at least one primary blow-molded article being transferred from the one relay arm to the secondary blow molding rotary section at a second transfer position where the one relay arm is disposed along a second straight line that passes through a second rotation center and the third rotation center, the first rotation center being a rotation center of the primary blow molding rotary section, the second rotation center being a rotation center of the secondary blow molding rotary section, and the third rotation center being a rotation center of the relay rotary section.

14. The rotary blow molding apparatus according to claim 13,
the at least one holding section being reciprocated in a horizontal plane by a stroke that allows transfer in a direction parallel to the first straight line or the second straight line, and positioned opposite to at least one second holding section provided in the primary blow molding rotary section or the secondary blow molding rotary section within a given rotation angle around the first transfer position or the second transfer position.

15. The rotary blow molding apparatus according to any one of claims 1 to 14,
each of the plurality of primary blow molds or the plurality of secondary blow molds including a stationary cavity mold and a movable cavity mold, the movable cavity mold being opened and closed relative to the stationary cavity mold having a vertical parting surface around a first fulcrum that is a stationary horizontal shaft;
the rotary blow molding apparatus further comprising a mold open/close drive mechanism that opens and closes the movable cavity mold relative to the stationary cavity mold,
the mold open/close drive mechanism including:
a first link that has a first end and a second end, the first end being rotatably connected to a second fulcrum provided in the movable cavity mold;
a second link that has a third end and a fourth end, the third end being rotatably connected to a third fulcrum provided at the second end of the first link;
a third link that has a fifth end and a sixth end, the fifth end being rotatably connected to a fourth fulcrum provided between the third end and the fourth end of the second link, the sixth end being rotatably connected to a stationary fifth fulcrum, the third link rotating around the fifth fulcrum; and
a moving member that reciprocates a sixth fulcrum provided at the fourth end of the second link across a vertical line that passes through the fifth fulcrum.
